# EUROPÄISCHE PATENTANMELDUNG

(11) **EP 2 309 214 A2**
(43) Veröffentlichungstag der Anmeldung: **13.04.2011**
(21) Anmeldenummer: 10170551.5
(22) Anmeldetag: 23.07.2010
(51) Int. Cl.: F25D 13/06

(54) **Verfahren und Kühltunnel zum Kühlen von Gütern**

(30) Priorität: 30.09.2009 DE 102009045142
(71) Anmelder: Voith Patent GmbH, 89522 Heidenheim (DE)
(72) Erfinder: Pumpe, Rainer Klaus, 95448 Bayreuth (DE)

(57) **Zusammenfassung**

Die Erfindung betrifft ein Verfahren zum Kühlen von Gütern, insbesondere Lebensmittel, wie Molkereiprodukte, bei dem die zu kühlenden Güter auf Paletten gestapelt werden und diese Stapel (3) kontinuierlich oder diskontinuierlich nacheinander einen Kühltunnel (1, 1.1) durchlaufen und dabei mindestens einem Kühlmittelstrom (6) ausgesetzt werden, wobei der Kühlmittelstrom (6) quer zur Förderrichtung (F) der Stapel (3) einer Seite der Stapel (3) zugeführt wird, die Stapel (3) durchdringt und auf der anderen Seite der Stapel (3) abgesaugt (7) wird.

Gemäß eines ersten erfindungsgemäßen Verfahrens ist vorgesehen, dass ein erster Kühlmittelstrom (6.1) durch eine Düsenplatte (8) in einer von außen nach innen weisenden Richtung (R1) geblasen wird und anschließend ein zweiter Kühlmittelstrom (6.2) in einer von innen nach außen weisenden Richtung (R2) durch die Stapel (3) gesaugt wird, wobei während des Blasens die Düsenplatte (8) weggeklappt wird.

Gemäß eines zweiten erfindungsgemäßen Verfahrens ist vorgesehen, dass ein Kühlmittelstrom (6.2) entweder in einer von außen nach innen weisenden Richtung oder in einer von innen nach außen weisenden Richtung durch die Stapel (3) gesaugt wird.

Die Erfindung betrifft auch Kühltunnel (1).

## Beschreibung

Die Erfindung betrifft ein Verfahren zum Kühlen von Gütern, insbesondere Lebensmittel, wie Molkereiprodukte, bei dem die zu kühlenden Güter gestapelt werden und diese Stapel kontinuierlich oder diskontinuierlich nacheinander und in parallelen Reihen nebeneinander durch einen Kühltunnel in einer Förderrichtung gefördert werden und dabei einem Kühlmittelstrom ausgesetzt werden, wobei der Kühlmittelstrom quer zur Förderrichtung der Stapel einer Seite der Stapel zugeführt wird, die Stapel durchdringt und auf der anderen Seite der Stapel abgesaugt wird.
Die Erfindung betrifft auch einen Kühltunnel zum Kühlen von Gütern.

Verfahren und Kühltunnel zum Kühlen von Gütern sind beispielsweise aus der DE 100 17 408, der EP 1 455 151 B1 oder der nachveröffentlichten DE 10 2008 040 353.5 bekannt. Außerdem wird auf die DE 10 2007 059 654 A1 verwiesen. Diese Druckschrift offenbart eine Behandlungsvorrichtung zum Kühlen und/oder Erwärmen von Gegenständen, die eine Düsenplatte mit einer Vielzahl von variierbaren Düsenöffnungen zur Abgabe eines gasförmigen Behandlungsmediums umfasst.

Da bei aktuellen Kühltunneln der Kühlmittelstrom, insbesondere Luft, nur von einer Seite aus quer zur Lauf- bzw. Förderrichtung in die zu kühlenden Stapel eingeblasen wird, erfolgt bei diskontinuierlich betriebenen Kühltunneln eine Umsetzung der Stapel, um auch die andere Seite anblasen zu können. Bei kontinuierlich betriebenen Kühltunneln werden die Stapel, ohne den Standort zu wechseln, gedreht. Mit diesen Maßnahmen erreicht man eine gleichmäßige Kühlung bzw. Abkühlung von heiß oder warm eingefüllten Gütern, wie z.B. in Becher eingefülltem Joghurt.

Diese Maßnahmen erfordern allerdings einen hohen apparatetechnischen, steuerungstechnischen und energetischen Aufwand. Nachteilig ist auch, dass im Bereich, wo eine Drehung oder Umsetzung der Stapel stattfindet, keine Kühlung vorhanden ist und dadurch die Kühlkette unterbrochen wird.

Es ist daher Aufgabe der Erfindung, ein Verfahren zum Kühlen von Gütern, insbesondere von auf Paletten gestapelten Gütern, sowie einen Kühltunnel zum Kühlen bzw. Abkühlen dieser Güter anzugeben, das bzw. der die Nachteile des Standes der Technik nicht aufweist.

Die Aufgabe wird mittels eines ersten Verfahrens mit den Merkmalen des Anspruches 1 gelöst.

Erfindungsgemäß ist vorgesehen, dass ein erster Kühlmittelstrom durch eine Düsenplatte in einer von außen nach innen weisenden Richtung geblasen wird und anschließend ein zweiter Kühlmittelstrom in einer von innen nach außen weisenden Richtung durch die Stapel gesaugt wird.

Vorteil hierbei ist, dass im diskontinuierlichen Kühltunnel, wo die zu kühlenden Güter so lange wie nötig kühlen können, bis die gewünschte Temperatur erreicht ist, keine Umsetzung der Güter, zwecks gleichmäßiger Kühlung, notwendig ist. Auch bei kontinuierlich betriebenen Kühltunneln, wo die Stapel bzw. Paletten kontinuierlich durch den Kühltunnel gezogen werden, bis die geforderte Temperatur erreicht ist, werden keine Drehvorrichtungen für die gleichmäßige Kühlung der Stapel von allen Seiten benötigt.

Aufgrund der Verfahrensführung ist der Kühlprozess variabler als bisher. Der energetische, apparatetechnische und steuerungstechnische Aufwand lässt sich dadurch deutlich reduzieren.

Zu erwähnen ist, dass beim zweiten Verfahrensschritt, d.h. beim Saugprozess bzw. "Durchsaugen" die auf der ursprünglichen Blassseite (Druckraum) vorhandene Düsenplatte, die ja für den ersten Verfahrensschritt "Blasen" benötigt wird, beim Saugen einfach weggeklappt wird. Dadurch vermeidet man Drosseleffekte, die sonst vorhanden wären.

Die Aufgabe der Erfindung wird auch mittels eines zweiten Verfahrens mit den Merkmalen des Anspruches 2 gelöst. Bei diesem Verfahren ist vorgesehen, dass der Kühlmittelstrom nur gesaugt wird und dass dies ständig erfolgt. Hierbei kann also gänzlich auf die Düsenplatte verzichtet werden. Das Saugen erfolgt entweder in einer von außen nach innen weisenden Richtung oder in einer von innen nach außen weisenden Richtung, wobei der wenigstens eine Kühlmittelstrom, insbesondere gekühlte Luft durch die Stapel gesaugt und an der anderen Seite die nun erwärmte Luft abgezogen wird.

Nachteilig ist zwar, dass wieder ein Umsetzen der Stapel beim diskontinuierlichen Betrieb und ebenso Drehvorrichtungen beim kontinuierlichen Betrieb notwendig sind. Der aber überwiegende Vorteil besteht in einem geringeren Energieeinsatz, da eine Drosselwirkung generell durch die hier nicht vorhandene Düsenplatte entfällt.

Eine vorteilhafte Ausgestaltung beider vorstehend beschriebenen Verfahren besteht darin, Leitmittel, d.h. feststehende Wände, flexible Planen oder Folien aus einem Plastikmaterial oder ähnlichem luftundurchlässigen Material anzuordnen.

Damit wird verhindert, dass der Kühlmittelstrom bzw. die Luft die zu kühlenden Stapel bzw. Paletten in seitliche Richtung verlässt oder die Stapel nur äußerlich umströmt und nicht wie gewünscht, die Stapel in ihrer gesamten Tiefe durchströmt und dadurch ausreichend kühlt.

Die Leitmittel werden vorzugsweise seitlich angeordnet. Zusätzlich können auch Leitmittel auf die Oberseite der Stapel verbracht werden bzw. eine U-förmige Abdeckung bilden. Beim Saugprozess genügt sogar nur eine auf die Oberseite der Stapel gelegte Plane oder Folie.

Bei beiden Verfahren wird im Übrigen und in zweckmäßiger Weise der durchgeblasene oder durchgesaugte Kühlmittelstrom, insbesondere erwärmte Luft, nach oben über die Decke des Kühltunnels oder auch nach unten über den Keller abgesaugt.

Die Erfindung betrifft auch einen Kühltunnel gemäß Anspruch 5. Der Kühltunnel dient zum Kühlen von Gütern, insbesondere von auf Paletten gestapelten Lebensmitteln, wie beispielsweise Molkereiprodukte, wobei diese Stapel kontinuierlich oder diskontinuierlich nacheinander im Inneren des Kühltunnels der Stapel transportierbar sind und dabei mit wenigstens einem Kühlmittelstrom beaufschlagbar sind. Zur Abgabe des Kühlmittelstromes ist eine Blaseinrichtung und eine davor angeordnete Düsenplatte vorgesehen. Der Kühlmittelstrom durchdringt die Stapel mit den zu kühlenden Gütern in einer von außen nach innen weisenden Richtung. Der Kühltunnel umfasst auch eine Saugeinrichtung für das Durchsaugen eines zweiten Kühlmittelstromes durch die Stapel in einer von innen nach außen weisenden Richtung. Beim Durchsaugen ist zwecks Vermeidung einer Drosselwirkung die Düsenplatte weggeklappt.

Die Erfindung betrifft außerdem einen Kühltunnel gemäß Anspruch 6. Dieser Kühltunnel weist im Gegensatz zum vorstehend beschriebenen Tunnel gemäß Anspruch 5 keine Düsenplatte sondern nur eine Saugeinrichtung für ständiges Saugen auf. Mit dieser Saugeinrichtung ist der Kühlmittelstrom entweder in einer von außen nach innen weisenden Richtung oder in einer von innen nach außen weisenden Richtung durch die Stapel saugbar. Hierbei ist der Energieeinsatz besonders gering, da die Drosselwirkung durch die hier nicht vorhandene Düsenplatte entfällt.

In beiden erfindungsgemäßen Kühltunneln können zur Verbesserung der Kühlleistung die einzelnen Stapel abgeschirmt sein. Dazu sind Leitmittel, wie Wände oder Folien oder Planen aus Plastik oder Textilmaterial verwendbar, die seitlich der Stapel angeordnet sind. Zusätzlich oder alternativ ist ein solches Leitmittel auch an den Oberseiten der Stapel anbringbar.

Vorteilhaft ist es auch, wenn der vor der Düsenplatte vorhandene Blasluft- bzw. Druckraum vom Kühlraum nach der Düsenplatte sowie auch im zweiten Fall der Saugraum vom Kühlraum jeweils mit Abdichtungen versehen ist. Damit lassen sich Druck- und Kühlverluste weiter vermindern. Die Abdichtungen sind dafür am Leitmittel und/oder an der zu kühlenden Palette und/oder an der Kühlstation des Kühltunnels selbst angebracht.

Die Erfindung ist besonders geeignet zum Einsatz in der Lebensmittelindustrie. Vor allem Molkereierzeugnisse können nun effektiver schonend gekühlt werden und sind dadurch länger haltbar.

Obwohl die Erfindung für ein Kühlen von Produkten bzw. Gütern vorgesehen und beschrieben ist, so eignet sich das Verfahren prinzipiell auch für deren Erwärmung. Anstelle des beschriebenen Kühltunnels ist dann ein entsprechender Wärme- bzw. Heiztunnel vorhanden. Das Kühlmittel ist dann ein Wärme- bzw. Heizmittel.

Nachfolgend wird die Erfindung anhand eines Ausführungsbeispieles näher erläutert. Es zeigt in schematischer Darstellung:
- **Figur 1:**: die prinzipielle Draufsicht auf einen Teilbereich eines diskontinuierlich betriebenen Kühltunnels gemäß dem Stand der Technik;
- **Figur 2:**: die prinzipielle Draufsicht auf einen Teilbereich eines kontinuierlich betriebenen Kühltunnels gemäß dem Stand der Technik;
- **Figur 3:**: eine schematische Darstellung auf einen Teilbereich eines Kühltunnels in dem ein erster Verfahrensschritt der ersten Erfindung durchgeführt wird;
- **Figur 4:**: eine schematische Darstellung auf einen Teilbereich eines Kühltunnels in dem ein zweiter Verfahrensschritt der ersten Erfindung durchgeführt wird;
- **Figur 5:**: eine zweckmäßige Weiterbildung der in Figur 3 gezeigten Lösung;
- **Figur 6 und 7:**: Negativbeispiele für Kühlmittelströmungen ohne Anwendung von Leitmitteln;
- **Figur 8:**: eine Seitenansicht eines Stapels mit Verwendung eines erfindungsgemäßen Leitmittels;
- **Figur 9:**: eine schematische Darstellung auf einen Teilbereich eines Kühltunnels gemäß einer zweiten Erfindung;

In den Figuren sind gleiche Bauteile mit gleichem Bezugszeichen versehen.

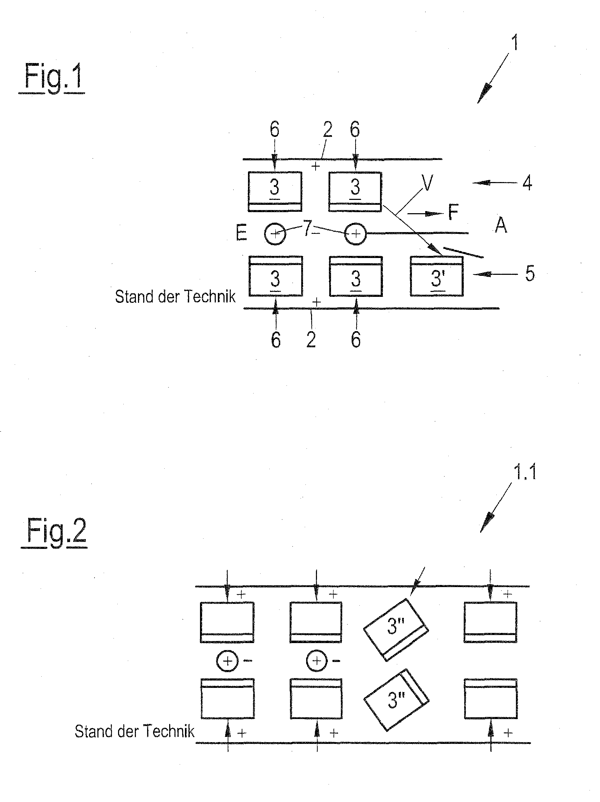

In der **Figur 1** ist ein Ausschnitt aus einem, aus dem Stand der Technik bekannten Kühltunnel 1 in der Draufsicht gezeigt. Der Kühltunnel 1 weist ein Gehäuse mit zwei parallelen Außenwänden 2 auf, die die Längsseiten bilden, sowie einen Eingang E und einen Ausgang A an seinen Stirnseiten für die durch den Kühltunnel zu transportierenden, zu kühlenden Güter. Die Güter, beispielsweise Molkereierzeugnisse, wie Joghurt in Bechern, sind nebeneinander und übereinander auf einer Palette gestapelt. Ein solche Palette bzw. Stapel ist mit 3 bezeichnet. Man erkennt in Figur 1, dass die Stapel 3 in zwei parallelen Reihen 4 und 5 nebeneinander durch den Kühltunnel 1 in Förderrichtung F gefördert werden. Während ihres Aufenthaltes bzw. Behandlung im Kühlkanal 1, was hier diskontinuierlich erfolgt, wird nur eine Seite des Stapels 3 einem Kühlmittelstrom 6, insbesondere gekühlte Luft ausgesetzt. Die Luft erwärmt sich bei ihrem Weg durch die Palette.

In der Figur 1 ist angedeutet, dass der Kühlmittelstrom 6 quer zur Förderrichtung F dem bzw. der Stapel 3 zugeführt wird, danach die Stapel durchdringt und die nun erwärmte Luft auf der anderen Seite der Stapel 3 mit einer Absaugung 7 abgesaugt wird. Das Absaugen der erwärmten Luft erfolgt beispielsweise nach oben gerichtet über die Decke des Kühltunnels 1 oder nach unten gerichtet über den Keller.

Beim diskontinuierlichen Kühltunnel wird ja der Stapel bzw. die Palette an eine bestimmte Stelle gesetzt, anschließend umgesetzt und bei Erreichen der gewünschten Temperatur mit einem Flurfördergerät aus dem Tunnel gefahren.

Die Umsetzung ist notwendig, damit eine gleichmäßige Abkühlung der gestapelten Güter gewährleistet wird. Das Versetzen der Stapel 3 ist in der Figur 1 mit dem schrägen Pfeil V und dem nun umgesetzten Stapel 3' angedeutet.

Die umgesetzte, d.h. gegenüberliegende Seite der Stapel ist mit einem Doppelstrich in der Figur 1 kenntlich gemacht.

Die **Figur 2** zeigt einen bekannten kontinuierlich betriebenen Kühlkanal 1.1, der prinzipiell gleich aufgebaut ist, wie der in Figur 1 bezeichnete diskontinuierliche Kühlkanal, so dass auf eine Wiederholung der Beschreibung und Eintragung der bereits aus Figur 1 bekannten Bezugszeichen in der Figur 2 verzichtet wird. Anstelle die Stapel umzusetzen (siehe Figur 1), erfolgt hier eine Drehung derselben, wie mit Bezugszeichen 3" dargestellt ist.

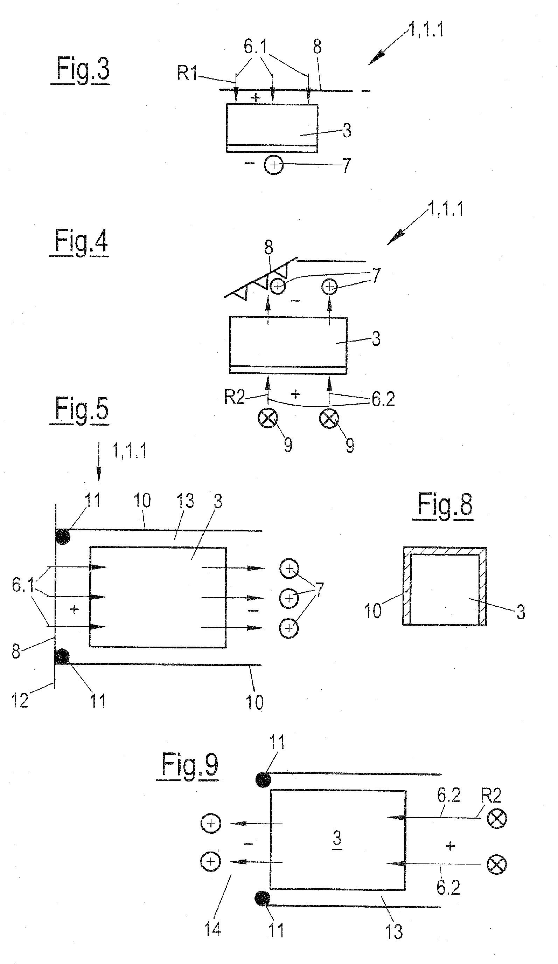

Um eine Optimierung der Produktabkühlung bei verringertem Aufwand an Maschinenbau, Steuerung und Energieeinsatz vornehmen zu können, wird gemäß einer ersten Lösung und wie in **Figur 3** gezeigt, ein erster Kühlmittelstrom 6.1 durch eine Düsenplatte 8 in einer von außen nach innen weisenden Richtung R1 (Blasrichtung) geblasen und mittels Absaugung 7 nach oben abgesaugt. Anschließend wird, wie in **Figur 4** gezeigt, zur Vergleichmäßigung der Kühlung ein von einer Kühlmittel- bzw. Luftzuführung 9 ausgehender, zweiter Kühlmittelstrom 6.2 in einer von innen nach außen weisenden Richtung R2 (Saugrichtung) durch die Stapel 3 gesaugt.

Um beim Saugen einen Drosseleffekt der bei der Funktion "Blasen" nötigen Düsenplatten 8 zu vermeiden, wird diese beim "Saugen" einfach weggeklappt. Das erfolgt entweder automatisch gesteuert oder mit Hilfe des Druckes des SaugLuftstromes. Auch hierbei wird die nach dem Durchsaugen der Stapel 3 sich erwärmende Luft über die Absaugung 7 abgeführt.

Vorteil ist, dass die in Figur 1 und 2 gezeigten Maßnahmen des Umsetzen oder Drehens der Stapel nicht notwendig sind und dennoch ein effektives und gleichmäßiges Kühlergebnis erreicht wird.

Zu erwähnen ist, dass die Düsenplatte 8 mit ihrer Vielzahl an nicht im Einzelnen dargestellten Düsen für die Verteilung des Kühlmittelstroms 6 bzw. 6.1 und die gleichmäßige Umströmung der einzelnen Güter mit dem Kühlmittelstrom sorgt. Die besagte Düsenplatte 8 weist wie gesagt, eine Vielzahl an Düsen, die entweder über die ganze Platte 8 verteilt und partiell verschließbar oder sind bereichsweise angeordnet sind. Ihre Größe und/oder ihre Ausströmstärke kann verstellt werden, je nachdem wie breit und wie hoch die Stapel und auch wie dicht sie gestapelt sind. Gewünschtenfalls ist eine automatisierte Düseneinstellung möglich.

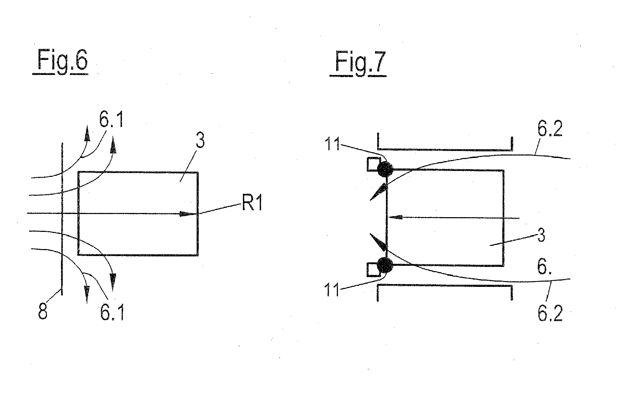

In **Figur 5** ist eine Weiterbildung des in Figur 3 gezeigten Kühltunnels 1 bzw. 1.1 dargestellt. Hier sind zur Verbesserung des Kühleffektes und um zu verhindern, dass die Luft nur seitlich, wie in **Figur 6 und 7** als Negativbeispiel gezeigt, die Stapel 3 verlässt oder nur äußerlich umströmt und nicht die ganze Tiefe des Stapels 3 durchströmt, Leitmittel 10 vorgesehen. Die Leitmittel 10 sind im Beispiel Plastikfolien oder dünne Wände, die wie **Figur 8** zeigt, dreiseitig angeordnet bzw. über je einen Stapel 3 gestülpt sind. Zwischen den Leitmitteln 10 und der in Figur 5 eingezeichneten Düsenplatte 8 für das An- bzw. Durchblasen des Kühlmittelstromes 6.1 sind Abdichtungen 11 vorhanden. Diese dichten einen vor der Düsenplatte 8 vorhandenen Blas-Druckraum 12, der mit einem Plus (+) gekennzeichnet ist, vom Kühlraum 13 des Kühltunnel 1 bzw. 1.1 ab.

In **Figur 9** ist ein zweites Verfahren angedeutet. Es beinhaltet, dass ein Kühlmittelstrom 6.2 vorgesehen, der entweder in einer von außen nach innen weisenden Richtung R1 oder in einer von innen nach außen weisenden Richtung R2 durch die Stapel 3 gesaugt wird.

Diese Variante ist zwar energiesparend, aber dafür erfordert sie wieder den Einsatz der in Figur 1 und 2 gezeigten und beschriebenen Umsetzungs- oder Dreheinrichtungen für die Stapel 3' oder 3", welche aber hier nicht mit eingezeichnet sind.

Auch in dieser Figur 9 sind Leitmittel 10 und Abdichtungen 11 eingezeichnet, mit denen ein Saugraum 14 vom Kühlraum 13 abgedichtet wird.

Nachzutragen ist, dass in den Figuren 1 bis 5 und 9 der Druckraum mit einem "Plus" für Überdruck und einem "Minus" für Unterdruck bezeichnet ist.

### Bezugszeichenliste

- 1, 1.1: Kühltunnel
- 2: Außenwand
- 3: Stapel
- 3': Stapel versetzt
- 3": Stapel gedreht
- 4: Reihe der Stapel
- 5: Reihe der Stapel
- 6: Kühlmittelstrom
- 6.1: geblasene Kühlmittel
- 6.2: gesaugtes Kühlmittel
- 7: Absaugung
- 8: Düsenplatte
- 9: Kühlmittel- bzw. Luftzuführung
- 10: Leitmittel
- 11: Abdichtung
- 12: Blas-Druckraum
- 13: Kühlraum
- 14: Saugraum
- E: Eingang
- A: Ausgang
- F: Förderrichtung
- R1: Blasrichtung
- R2: Saugrichtung
- V: Pfeil für Versetzen

## Patentansprüche

1. Verfahren zum Kühlen von Gütern, insbesondere Lebensmittel, wie Molkereiprodukte, bei dem die zu kühlenden Güter auf Paletten gestapelt werden und diese Stapel (3) kontinuierlich oder diskontinuierlich nacheinander einen Kühltunnel (1, 1.1) durchlaufen und dabei mindestens einem Kühlmittelstrom (6) ausgesetzt werden, wobei der Kühlmittelstrom (6) quer zur Förderrichtung (F) der Stapel (3) einer Seite der Stapel (3) zugeführt wird, die Stapel (3) durchdringt und auf der anderen Seite der Stapel (3) abgesaugt (7) wird, **dadurch gekennzeichnet, dass** ein erster Kühlmittelstrom (6.1) durch eine Düsenplatte (8) in einer von außen nach innen weisenden Richtung (R1) geblasen wird und anschließend ein zweiter Kühlmittelstrom (6.2) in einer von innen nach außen weisenden Richtung (R2) durch die Stapel (3) gesaugt wird, wobei während des Blasens die Düsenplatte (8) weggeklappt wird.

2. Verfahren zum Kühlen von Gütern, insbesondere Lebensmittel, wie Molkereiprodukte, bei dem die zu kühlenden Güter auf Paletten gestapelt werden und diese Stapel (3) kontinuierlich oder diskontinuierlich nacheinander einen Kühltunnel (1) durchlaufen und dabei mindestens einem Kühlmittelstrom (6) ausgesetzt werden, wobei der Kühlmittelstrom (6) quer zur Förderrichtung (F) der Stapel (3) einer Seite der Stapel (3) zugeführt wird, die Stapel (3) durchdringt und auf der anderen Seite der Stapel (3) abgesaugt (7) wird, **dadurch gekennzeichnet, dass** ein Kühlmittelstrom (6.2) entweder in einer von außen nach innen weisenden Richtung (R2) oder in einer von innen nach außen weisenden Richtung (R2) durch die Stapel (3) gesaugt wird.

3. Verfahren nach Anspruch 1 oder 2, **dadurch gekennzeichnet, dass** die Stapel (3) jeweils mit Leitmitteln (10) abgeschirmt und abgedichtet werden.

4. Verfahren nach Anspruch 1 bis 3, **dadurch gekennzeichnet, dass** der abgesaugte Kühlmittelstrom (6), insbesondere erwärmte Luft, abgesaugt wird.

5. Kühltunnel (1) zum Kühlen von Gütern, insbesondere von auf Paletten gestapelten Lebensmitteln, wie Molkereiprodukte, wobei diese Stapel (3) kontinuierlich oder diskontinuierlich nacheinander im Inneren, d.h. einem Kühlraum (13) des Kühltunnels (1) in Förderrichtung (F) der Stapel (1) transportierbar sind und dabei mit wenigstens einem Kühlmittelstrom (6) beaufschlagbar sind, **dadurch gekennzeichnet, dass** ein erster Kühlmittelstrom (6.1) sowie eine Düsenplatte (8) vorgesehen sind, wobei der Kühlmittelstrom (6.1) über die Düsenplatte (8) in einer von außen nach innen weisenden Richtung (R1) an die Stapel (3) blasbar ist, sowie ein zweiter von einer Kühlmittelzuführung (9) ausgehender Kühlmittelstrom (6.2) vorgesehen ist, der durch die Stapel (3) in einer von innen nach außen weisenden Richtung (R2) saugbar ist, wobei während des Saugens die Düsenplatte (8) wegklappbar ist.

6. Kühltunnel (1, 1.1) zum Kühlen von Gütern, insbesondere von auf Paletten gestapelten Lebensmitteln, wie Molkereiprodukte, wobei diese Stapel (3) kontinuierlich oder diskontinuierlich nacheinander im Inneren, d.h. einem Kühlraum (13) des Kühltunnels (1, 1.1) in Förderrichtung (F) der Stapel (1) transportierbar sind und dabei mit wenigstens einem Kühlmittelstrom (6) beaufschlagbar sind, **dadurch gekennzeichnet, dass** nur ein solcher Kühlmittelstrom (6.2) vorgesehen ist, der entweder in einer von außen nach innen weisenden Richtung (R1) oder in einer von innen nach außen weisenden Richtung (R2) durch die Stapel (3) saugbar ist.

7. Kühltunnel (1) nach Anspruch 5 oder 6, **dadurch gekennzeichnet, dass** zur Abschirmung der Stapel (3) Leitmittel (10) vorgesehen sind.

8. Kühltunnel (1) nach Anspruch 7, **dadurch gekennzeichnet, dass** die Leitwände (10) seitlich und/oder oberhalb der Stapel (3) angeordnet sind.

9. Kühltunnel (1) nach Anspruch 7 oder 8, **dadurch gekennzeichnet, dass** zusätzlich Abdichtungen (11) vorhanden sind.
